# EUROPÄISCHE PATENTSCHRIFT

(11) **EP 1 891 347 B1**
(45) Veröffentlichungstag und Bekanntmachung des Hinweises auf die Patenterteilung: **15.07.2009**
(21) Anmeldenummer: 06724484.8
(22) Anmeldetag: 21.04.2006
(51) Int. Cl.: F16D 23/14

(54) **AUSRÜCKLAGER EINER SCHALTTRENNKUPPLUNG**
RELEASE BEARING OF A DISCONNECT CLUTCH
BUTEE D'EMBRAYAGE DE CHANGEMENT DE VITESSES

(30) Priorität: 31.05.2005 DE 102005024749
(43) Veröffentlichungstag der Anmeldung: 27.02.2008
(73) Patentinhaber: Schaeffler KG, 91074 Herzogenaurach (DE)
(72) Erfinder: WINKELMANN, Ludwig, 91056 Erlangen (DE); DITTMER, Steffen, 91086 Aurachtal (DE)
(86) Internationale Anmeldenummer: PCT/EP2006/003662
(87) Internationale Veröffentlichungsnummer: WO 2006/128523

(56) Entgegenhaltungen:
- DE-A1- 1 680 631
- DE-A1- 3 108 609
- DE-A1- 3 424 227
- GB-A- 1 041 952

## Beschreibung

### Gebiet der Erfindung

Die Erfindung betrifft ein Ausrücklager einer Schalttrennkupplung, insbesondere für Kraftfahrzeuge mit manuell geschalteten oder automatisierten Schaltgetrieben.

### Hintergrund der Erfindung

DE 16 80 631 beschreibt eine als Druckplatte bezeichnete Anlaufscheibe im Eingriff mit einem Kupplungsausrücklager, die an der mit dem Kupplungsausrücklager in Eingriff kommenden Seite mit einem verschleißfesten und geräuschmindernden Kunststoffring versehen ist.

In der DE 34 24 227 ist eine Kunststoff-Anlaufscheibe an einem Ausrücklager einer Schalttrennkupplung beschrieben, deren kupplungsferne Fläche mit einem Ringflansch eines umlaufenden Lagerrings des Ausrücklagers in Druckkontakt steht und deren kupplungsnahe Fläche sich mit Federzungen einer Tellerfeder in Druckkontakt und zusätzlich über Haltearme und radial zwischen den Federzungen verlaufenden Stegen in Formschluss befindet.

Nachteilig an der beschriebenen Anlaufscheibe ist u. a. deren geringe Strukturfestigkeit und deren hoher Verschleiß, was eine dementsprechende niedrige Gebrauchsdauer zur Folge hat. Außerdem besteht eine starke Geräuschentwicklung bedingt durch den Schlupf zwischen der kupplungsfernen Fläche der Anlaufscheibe und dem Ringflansch eines umlaufenden Lagerrings des Ausrücklagers.

### Aufgabe der Erfindung

Der Erfindung liegt die Aufgabe zugrunde, *eine* Anlaufscheibe *des gattungsbildenden Ausrücklagers* bezüglich Struktur- und Verschleißfestigkeit sowie Halterung, Selbstzentrierung und Geräuschentwicklung zu verbessern.

### Zusammenfassung der Erfindung

Die Aufgabe wird gelöst durch die Merkmale des unabhängigen Patentanspruchs 1.

Die metallene Armierung macht die Anlaufscheibe zu einem Kunststoff-Metall-Verbundteil hoher Strukturfestigkeit. Dadurch wird ein Auflösen der Anlaufscheibe gegen Ende der Gebrauchsdauer vermieden.

Die metallenen Haltearme bieten gegenüber den angeformten Kunststoff-Haltearmen aus dem Stand der Technik eine erheblich höhere Belastbarkeit und Gebrauchsdauer.

Die hohe Struktur- und Verschleißfestigkeit der Anlaufscheibe rührt auch von dem strukturverstärkenden und verschleißmindernden Anteil z. B. an Kohlefasern im Kunststoff derselben.

Der reibungsmindernde PTFE-Anteil minimiert die Gleitreibung zwischen den Federzungen und deren Kontaktfläche an der Anlaufscheibe und erleichtert so die Betätigung der Kupplung.

Ein weiterer Vorteil der erfindungsgemäßen Lösung besteht darin, dass die kupplungsferne Fläche der Anlaufscheibe und die Oberfläche des vorzugsweise mit Kunststoff beschichteten Ringflanschs des umlaufenden Lagerrings Mikrostrukturen aufweisen, die zur raschen, formschlüssigen Verbindung zwischen beiden Flächen führen. Dadurch werden den Schlupf zwischen diesen und das damit verbundene Geräusch weitgehend unterbunden und die Selbstzentrierung des Ausrücklagers beschleunigt.

Die hohe Verschleißfestigkeit der erfindungsgemäßen Anlaufscheibe hängt auch von den verschleißbeständigen, z. B. vergüteten 17Cr34-Blech der Armierung ab. Wenn die Kunststoffumspritzung im Kontaktbereich der Federzungen verschlissen ist, verlängert sich die Gebrauchsdauer der Anlaufscheibe zumindest um die Gebrauchsdauer der Armierung.

Die Ausklinkungen und Durchbrüche der Armierung erhöhen deren Binde- und Strukturfestigkeit. Zusätzliche Versteifung wird durch Abwinkelungen bzw. Doppelungen in Bohrungs- und/oder Außendurchmesserbereich sowie im Bereich der Stege erreicht.

Es ist von Vorteil, dass die Haltearme über den Umfang der kupplungsnahen Fläche der Anlaufscheibe gleichmäßig verteilt und zwischen zwei benachbarten Federzungen einschnappbar sind und diese formschlüssig hintergreifen.

Durch die erfindungsgemäße Ausbildung der Haltearme werden diese durch axiale Druckanwendung zwischen zwei benachbarte Federzungen eingeschnappt und hintergreifen diese formschlüssig. Auf diese Weise ist eine zuverlässige axiale Verbindung zwischen der Anlaufscheibe und den Federzungen gewährleistet.

Vorteilhaft ist auch, dass die Haltearme in Umfangsrichtung jeweils paarweise angeordnet sind und dass deren die Federzungen hintergreifenden Haltevorsprünge voneinander abgewandt sind. Da die Haltearme und ihre Haltevorsprünge erfindungsgemäß vorzugsweise aus vergütetem Stahlblech oder Berylium-Bronze-Band (CuZn37F37 oder CuSn6Zn6F61) gefertigt sind, besteht keine Gefahr des Beschädigens oder Abbrechens derselben.

In einer weiteren vorteilhaften Ausgestaltung der Erfindung ist vorgesehen, dass zwischen aufeinander folgenden Paaren von Haltearmen an der kupplungsnahen Fläche der Anlaufscheibe radial verlaufende Stege angeordnet sind, deren Breite kleiner/gleich dem Abstand zweier benachbarter Federzungen ist und die zwischen diesen eingreifen. Auf diese Weise werden eine zusätzliche Verdrehsicherung geschaffen und in Umfangsrichtung auftretende Kräfte von den Haltearmen ferngehalten.

Eine sichere Verbindung zwischen den Haltearmen und der Anlaufscheibe wird dadurch geschaffen, dass die Haltearme in dem Kunststoff eingebettet oder an diesem beispielsweise durch Ultraschallverschweißung oder an der Armierung durch z. B. Punktschweißen, Löten, Kleben oder Stanznieten befestigt oder mit der Armierung einstückig ausgebildet sind.

Die Vielzahl der thermoplastischen Kunststoffe und deren reibungs- und verschleißmindernde sowie festigkeitssteigernde Zuschlagsstoffe ermöglichen eine anwendungsspezifische Optimierung des Werkstoffs der Anlaufscheibe.

Zur Verbesserung der Selbstzentrierung des Ausrücklagers und zur Senkung des bei der Selbstzentrierung auftretenden Geräuschs sowie zur Unterstützung der Verdrehsicherung zwischen der kupplungsfernen Fläche der Anlaufscheibe und der kunststoffbeschichteten Oberfläche des Ringsflanschs des umlaufenden Lagerrings ist es von Vorteil, dass als Mikrostruktur auf beiden Flächen zum Zentrum hin ausgerichtete Rippen vorgesehen sind, die als senkrechte oder als entgegen dem Drehsinn der jeweiligen Fläche geneigte Mikrorippen ausgebildet sind. Dadurch wird die Bildung eines Formschluss zwischen den Kontaktflächen gefördert und die mit dem Schlupf auftretende Geräuschentwicklung weitgehend verhindert.

Eine weitere vorteilhafte Ausbildung der Erfindung ist **dadurch gekennzeichnet, dass** eine Mikrostruktur der beiden Flächen durch Anspritzen einer grob gestrahlten oder mit Mikropyramiden oder Mikrokegeln versehenen Spritzgussform vorgesehen ist. Die Wirksamkeit der Mikropyramiden und Mikrokegel kann ebenfalls durch deren Neigung entgegen der Drehrichtung der jeweiligen Fläche gesteigert werden.

Eine vorteilhafte Weiterbildung der Erfindung besteht darin, dass als Mikrostruktur eine korrespondierende Plankerbverzahnung oder eine ähnlich wirksame Formgebung vorgesehen ist, die vorzugsweise auf beiden Flächen durch Anspritzen oder durch spanloses Einformen herstellbar ist. Durch die formschlüssige Plankerbverzahnung wird das Ausrücklager zwangsweise und damit schnell auf die Drehachse der Kupplung verlagert. Dadurch werden die Schlupfphase und das damit verbundene Geräusch und der Verschleiß minimiert.

### Kurze Beschreibung der Zeichnungen

Weitere Merkmale der Erfindung ergeben sich aus der nachfolgenden Beschreibung und den Zeichnungen, in denen Ausführungsbeispiele der Erfindung schematisch dargestellt sind.

Es zeigen:
- Figur 1: einen Längsschnitt durch eine erfindungsgemäße Anlaufscheibe entsprechend der Linie A-A in Figur 2;
- Figur 1a, b, c,: ein Detail "Z" der Figur 1 im Schnitt in den verschiedenen Varianten zur Verbesserung des Formschlusses Kunststoffteil zur Armierung;
- Figur 1d: einen Teilschnitt der Einzelheit "Z" der Figur 1;
- Figur 1e: eine Ansicht der Anlaufscheibe in Richtung des Pfeils "B";
- Figur 2: eine Ansicht der Anlaufscheibe in Richtung des Pfeils "X" der Figur 1;
- Figur 3: eine Ansicht der Anlaufscheibe in Richtung des Pfeils "Y" der Figur 1;
- Figur 3a: eine vergrößerte Teilansicht der Anlaufscheibe in Richtung des Pfeils "P" der Figur 3 mit senkrecht stehenden Mikrorippen;
- Figur 3b: eine vergrößerte Teilansicht wie in Figur 3a, jedoch mit sägezahnförmig geneigten Mikrorippen;

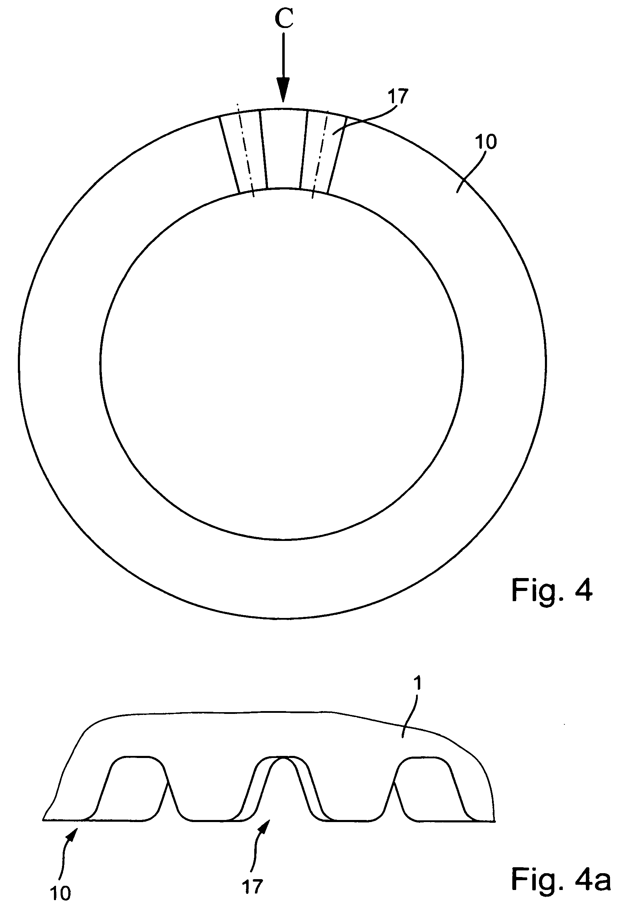

- Figur 4: eine Ansicht der Anlaufscheibe 1 in Richtung des Pfeils "Y" der Figur 1, jedoch mit Plankerbverzahnung;
- Figur 4a: eine Ansicht der Anlaufscheibe in Richtung "C" der Figur 4 in vergrößertem Maßstab;

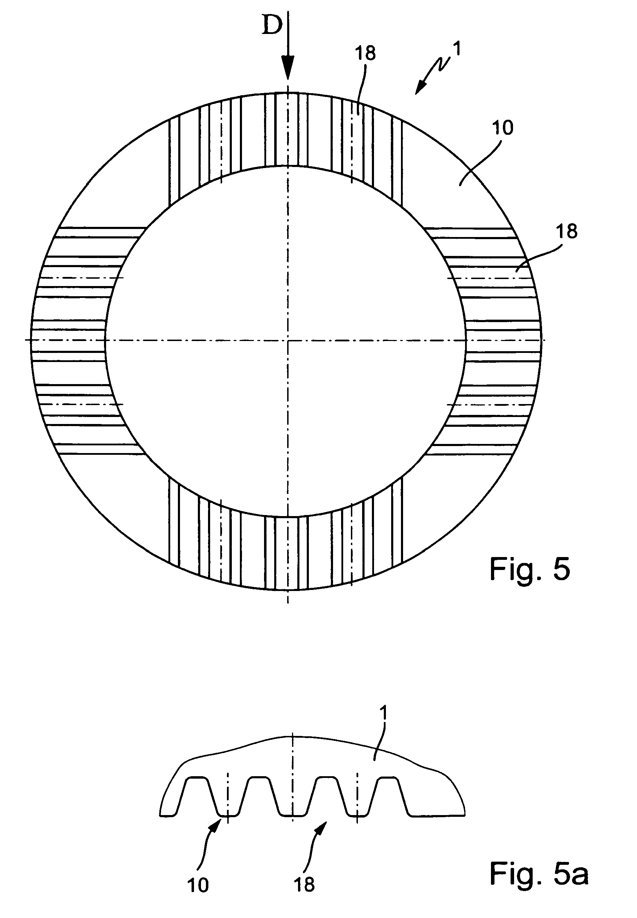

- Figur 5: eine Ansicht der Anlaufscheibe 1 in Richtung des Pfeils "Y" der Figur 1, jedoch mit Kreuzverzahnung und
- Figur 5a: eine Ansicht der Anlaufscheibe in Richtung "D" der Figur 5.

### Ausführliche Beschreibung der Zeichnungen

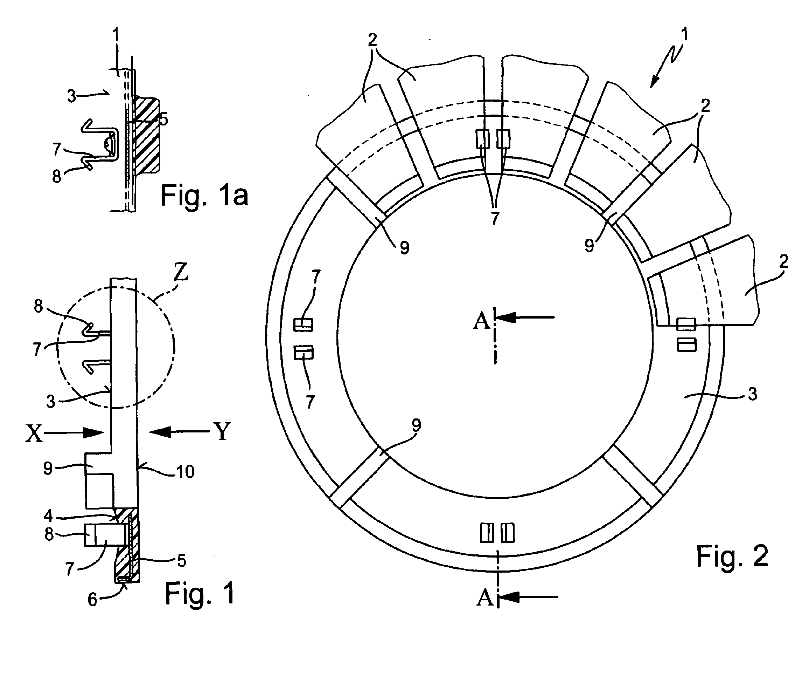

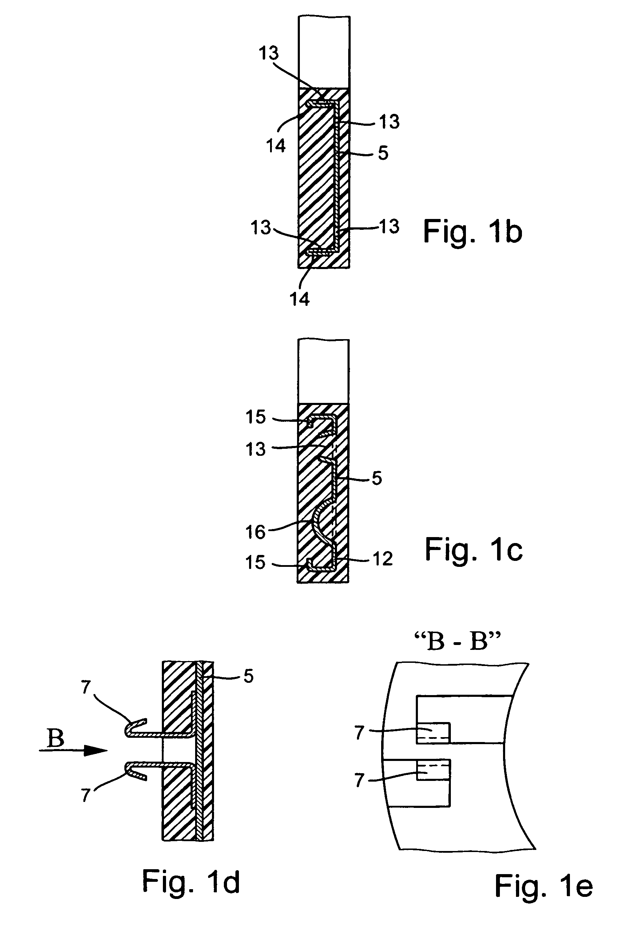

Die Figur 1 zeigt einen Längsschnitt durch eine erfindungsgemäße Anlaufscheibe 1 entsprechend der Linie A-A in Figur 2. Letztere stellt eine Ansicht der Anlaufscheibe 1 in Richtung des Pfeils "X" der Figur 1 dar, während die Figur 1a ein Detail "Z" der Figur 1 aufgebrochen zeigt.

Die Anlaufscheibe 1 dient zur Übertragung der Ausrückkraft eines Ausrücklagers auf die Federzungen 2 einer Tellerfeder einer Schalttrennkupplung. Die Schalttrennkupplung mit Tellerfeder und Ausrücklager sind nicht dargestellt.

Beim Aus- und Einkuppeln treten Gleitbewegungen zwischen den Federzungen 2 und einer kupplungsnahen Fläche 3 der Anlaufscheibe 1 auf. Dadurch verschleißt diese an der Kontaktfläche der Federzungen 2. Die Kontaktfläche ist als konkav gewölbte Umfangrinne 4 ausgebildet, in die die Enden der Federzungen 2 mit gleichsinniger Wölbung eingreifen.

Unter der Umfangrinne 4 befindet sich eine Armierung 5, die auch in Figur 1 a dargestellt ist. Sie weist am Außenumfang der Anlaufscheibe 1 eine Abwinkelung 6 auf. Die Armierung 5 ist der Form der Anlaufscheibe 1 entsprechend kreisringförmig ausgebildet und bis auf die Abwinkelung 6 von Kunststoff umspritzt.

Wie aus den Figuren 1, 1a und 2 hervorgeht, sind auf der kupplungsnahen Fläche 3 der Anlaufscheibe 1 über deren Umfang gleichmäßig verteilte Haltearme 7 mit Haltevorsprüngen 8 vorgesehen. Diese sind zwischen zwei benachbarten Federzungen 2 einschnappbar und hintergreifen diese formschlüssig. Die Haltearme 7 sind immer paarweise angeordnet und die Federzungen hintergreifenden Haltevorsprünge 8 sind immer voneinander abgewandt.

In Figur 1b, 1c und 1d ist die Armierung 5 durch Doppelungen 14, Durchbrüchen 13, Abwinkelungen im Bohrungs- und Außendurchmesserbereich versehen, was den Formschluss zwischen dem Kunststoff und der umspritzten Armierung erhöht. Separat davon, oder zusätzlich können auch Durchbrüche Ausklinkungen im Stegbereich den Formschluss verbessern.

Die Haltearme 7 sind erfindungsgemäß aus Federstahl oder federelastischem Bronzeband gefertigt, welche sich durch Elastizität und Verschleißfestigkeit auszeichnen. Sie werden zwischen zwei benachbarten Federzungen 2 durch axiale Druckanwendung eingeschnappt und hintergreifen die Federzungen 2 formschlüssig. Die Haltearme 7 sind wie aus Figur 1 hervorgeht mit der Armierung 5 durch Löten, Punktschweißen oder Stanznieten fest verbunden. Sie können aber wie Figur 1a zeigt, auch durch teilweises Umspritzen oder durch Ultraschall-Schweißen mit der Anlaufscheibe 1 fest verbunden werden. In Figur 1d sind die erfindungsgemäßen Haltearme 7 einstückig an der Armierung 5 angeformt.

Zur Verdrehsicherung der Anlaufscheibe 1 gegenüber den Federzungen 2 sind auf der kupplungsnahen Fläche 3 der Anlaufscheibe 1 mit dieser einstückig verbundene, radial verlaufende Stege 9 angeordnet. Deren Breite ist kleiner/gleich dem Abstand zweier benachbarter Federzungen 2, zwischen die die Stege 9 eingreifen. Diese nehmen die Seitenkraft der Federzungen 2 auf und entlasten dadurch die Haltearme 7 von in Umfangsrichtung wirkenden Kräften.

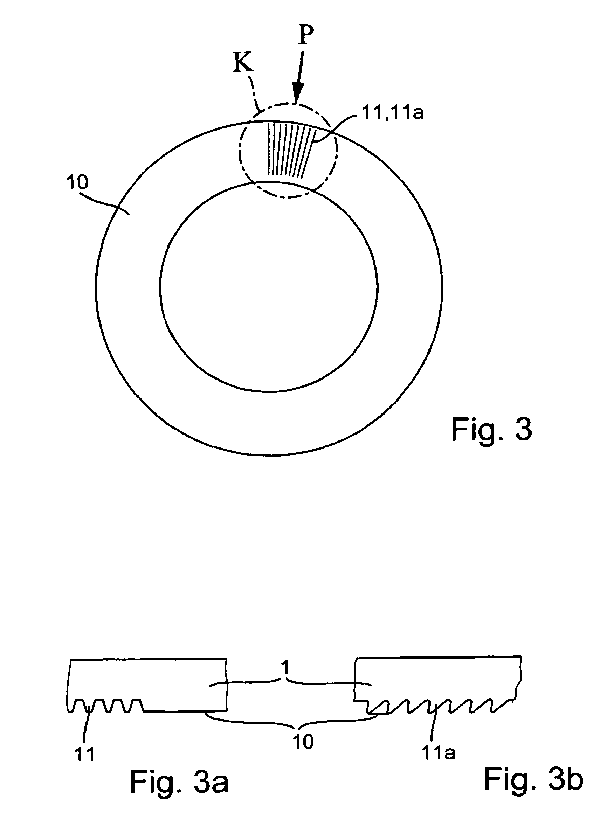

In Figur 3 wird eine Ansicht der kupplungsfernen Fläche 10 der Anlaufscheibe 1 in Richtung des Pfeils "Y" der Figur 1 gezeigt. Dazu gehört ein nicht dargestellter Ringflansch eines umlaufenden Lagerrings, der die Ausrückkraft der Kupplung auf die Fläche 10 überträgt. Um den beim Auskuppeln auftretenden Schlupf nebst Geräuschen und Verschleiß zu minimieren und die Selbstzentrierung des Ausrücklagers zu beschleunigen, werden auf die korrespondierenden Flächen reibungserhöhende Mikrostrukturen angespritzt, die eine rasche, formschlüssige Verbindung zwischen denselben bewirken.

Als Mikrostrukturen kommen z. B. grob gestrahlte Oberflächen, Mikropyramiden oder Mikrokegel in Frage, wobei letztere auch geneigt ausgebildet sein können. In Figur 3 sind im Bereich der Einzelheit "K" zentrumsgerichtete Mikrorippen 11, 11a angeordnet. Diese sind in den Figuren 3a, 3b aus der Richtung des Pfeils "B" der Figur 3 auf die Anlaufscheibe 1 gesehen vergrößert dargestellt.

Dabei stehen die Mikrorippen 11 der Figur 3a senkrecht auf der Fläche 10 und der Fläche des Ringsflanschs, während die Mikrorippen 11a der Figur 3b sägezahnförmig gegen den Drehsinn der Flächen geneigt angeordnet sind und dadurch sich rasch formschlüssig verkrallen.

Besonders geeignet für die Synchronisation und Selbstzentrierung von Ausrücklager und Anlaufscheibe 1 ist eine Oberflächenstruktur in Form einer Plankerbverzahnung 17 oder Kreuzverzahnung 18, die an beiden Flächen korrespondierend angeordnet ist. Sie kann durch spanloses Einformen in die Anlauffläche des umlaufenden Lagerrings oder durch Anspritzen von Kunststoff an der Anlaufscheibe oder am umlaufenden Lagerring des Ausrücklagers hergestellt werden.

### Bezugszeichenliste

- 1: Anlaufscheibe
- 2: Federzunge
- 3: kupplungsnahe Fläche
- 4: Umfangrinne
- 5: Armierung
- 6: Abwinkelung
- 7: Haltearm
- 8: Haltevorsprung
- 9: Steg
- 10: kupplungsferne Fläche
- 11: senkrechte Mikrorippe
- 11a: sägezahnförmige Mikrorippe
- 12: Ausklinkung
- 13: Durchbrüche
- 14: Doppelung
- 15: Abwinkelung
- 16: Durchstellung
- 17: Plankerbverzahnung
- 18: Kreuzverzahnung

## Patentansprüche

1. *Ausrücklager einer Schalttrennkupplung, mit einer Kunststoff-Anlaufscheibe (1)* deren kupplungsferne Fläche (10) mit einem Ringflansch eines umlaufenden Lagerrings des Ausrücklagers in Druckkontakt steht und deren kupplungsnahe Fläche (3) sich mit Federzungen (2) einer Tellerfeder in Druckkontakt und zusätzlich über Haltearme (7) und radial zwischen den Federzungen (2) verlaufenden Stegen (9) in Formschluss befindet, **dadurch gekennzeichnet, dass** die Anlaufscheibe (1) eine Armierung (5) und Haltearme (7) vorzugsweise aus Metall aufweist und der Kunststoff der Anlaufscheibe (1) einen strukturverstärkenden sowie reibungsmindernden Anteil besitzt und dass auf der kupplungsfernen Fläche (10) sowie auf der Fläche des vorzugsweise mit kunststoffbeschichteten Ringflanschs Mikrostrukturen zur raschen Bildung einer formschlüssigen Verbindung zwischen diesen beiden Flächen vorgesehen sind.

2. *Ausrücklager* nach Anspruch 1, **dadurch gekennzeichnet, dass** die Armierung (5) und Haltearme (7) aus dünnem, verschleißbeständigem und vorzugsweise vergütetem 17Cr34-Blech, Berylium-Bronze CuZn37F37 oder Berylium-Bronze CuSn6Zn6F61 bestehen, das von dem Kunststoff angespritzt oder umspritzt ist.

3. Ausrücklager nach Anspruch 1, **dadurch gekennzeichnet, dass** die Armierung (5) im Bereich der Stege (9) Ausklinkungen (12) und Durchbrüche (13) sowie im Bohrungs- und/oder Außendurchmesserbereich Doppelungen (14) und Abwinkelungen (15) aufweist.

4. Ausrücklager nach Anspruch 1, **dadurch gekennzeichnet, dass** die Haltearme (7) über den Umfang der kupplungsnahen Fläche (3) der Anlaufscheibe (1) verteilt und zwischen zwei benachbarten Federzungen (2) einschnappbar sind und diese formschlüssig hintergreifen.

5. *Ausrücklager* nach Anspruch 1, **dadurch gekennzeichnet, dass** die Haltearme (7) in Umfangsrichtung jeweils paarweise angeordnet und deren die Federzungen (2) hintergreifenden Haltevorsprünge (8) voneinander abgewandt sind.

6. *Ausrücklager* nach Anspruch 1, **dadurch gekennzeichnet, dass** zwischen aufeinander folgenden Paaren von Haltearmen (5) an der kupplungsnahen Fläche (10) der Anlaufscheibe (1) radial verlaufende Stege (9) angeordnet sind, deren Breite kleiner/gleich dem Abstand zweier benachbarter Federzungen (2) ist und die zwischen diesem eingreifen.

7. *Ausrücklager* nach Anspruch 1, **dadurch gekennzeichnet, dass** die Haltearme (7) im Kunststoff eingebettet oder an diesen beispielsweise durch Ultraschall-Verschweißung oder an der Armierung (5) durch z. B. Punktschweißen, Löten, Kleben oder Stanznieten befestigt oder mit der Armierung (5) einstückig ausgebildet sind.

8. *Ausrücklager* nach Anspruch 1, **dadurch gekennzeichnet, dass** für den Werkstoff der Anlaufscheibe (1) und für die Beschichtung der Flanschoberfläche des Ringflanschs neben dem durch Kohlefaseranteil verstärkten Werkstoffe
PA 46 CF 30 PTFE 5
PPA-GF 30 PTFE 15 und
PA46-GF 30 PTFE 5
folgende Werkstoffe und Zuschlagsstoffe geeignet sind:
Thermoplastischer Kunststoff, vorzugweise auf der Basis eines hochwärmebeständigen Polyamides oder anderer hochwärmebeständiger thermoplastischer Kunststoffe, beispielsweise Polyaryletherketone aus dem Bereich der Polyamide vorzugsweise Polyamid 46 oder teilaromatische Polyamide, vorzugsweise Polyphthalamid oder Poly-Hexamethylen-Therephthalamid bzw. Copolymere dessen mit Poly-Hexamethylen-Isophthalamid und/oder Poly-Hexamethylen-Adipinamid oder Poly-Methylpentamethylen-Terephthalamid mit reibungs- und verschleißmindernden sowie festigkeitssteigernden Zuschlagstoffen Kohlenstofffasern und/oder Aramidfasern in einem Gewichtsanteil von 1 bis 40 %, vorzugsweise Kohlenstofffasern mit einem Gewichtsanteil von 20 bis 30 %, Aramidfasern mit einem Gewichtsanteil von 1 bis 15 % sowie Festschmierstoffe wie Molybdändisulfid mit einem Gewichtsanteil von 1 bis 5 %, zusammen mit oder alternativ Graphit in einem Gewichtsanteil von 1 bis 10 %, zusammen mit oder alternativ Polytetrafluorethylen in einem Gewichtsanteil von 1 bis 30 %, vorzugsweise einem PTFE-Anteil von 5 bis 15 Gew.-%, zusammen mit oder alternativ Polyphenylensulfon in einem Gewichtsanteil von 1 bis 30 %, vorzugsweise 1 bis 15 Gew.-%.

9. Ausrücklager nach Anspruch 1, **dadurch gekennzeichnet, dass** als Mikrostruktur auf beiden Flächen zum Zentrum hin ausgerichtete Rippen angeordnet sind, die als senkrechte oder als entgegen dem Drehsinn der jeweiligen Fläche geneigte Mikrorippen (11, 11a) ausgebildet sind.

10. Ausrücklager nach Anspruch 1, **dadurch gekennzeichnet, dass** eine Mikrostruktur der beiden Flächen durch Anspritzen mit einer grob gestrahlten oder mit Mikropyramiden oder Mikrokegeln versehenen Spritzgussform vorgesehen ist.

11. Ausrücklager nach Anspruch 1, **dadurch gekennzeichnet, dass** als Mikrostruktur eine korrespondierende Plankerbverzahnung (17) oder eine ähnlich wirksame Kreuzverzahnung (18) vorgesehen sind, die auf beiden Kontaktflächen durch Aufspritzen oder an der Anlagefläche des umlaufenden Lagerrings des Ausrücklagers durch spanloses Einformen herstellbar sind.

## Claims

1. Release bearing of a disconnecting clutch having a plastic thrust washer (1), the surface (10) of which that is remote from the clutch being in pressure contact with an annular flange of a peripheral bearing ring of the release bearing and the surface (3) of which that is near the clutch being in pressure contact with spring tongues (2) of a cup spring and additionally in positive engagement by means of holding arms (7) and webs (9) extending radially between the spring tongues (2), **characterized in that** the thrust washer (1) has a reinforcement (5) and holding arms (7), preferably made of metal, and the plastic of the thrust washer (1) has a structure-reinforcing and friction-reducing component and **in that** microstructures are provided on the surface (10) that is remote from the clutch and on the surface of the preferably plastic-coated annular flange, for the rapid forming of a positive connection between these two surfaces.

2. Release bearing according to Claim 1, **characterized in that** the reinforcement (5) and holding arms (7) consist of thin, wear-resistant and preferably heat-treated 17Cr34 sheet, or beryllium bronze CuZn37F37 or beryllium bronze CuSn6Zn6F61, which is molded onto or over with the plastic.

3. Release bearing according to Claim 1, **characterized in that** the reinforcement (5) has notches (12) and apertures (13) in the region of the webs (9) and doubled-over portions (14) and angled-away portions (15) in the region of the bore and/or outside diameter.

4. Release bearing according to Claim 1, **characterized in that** the holding arms (7) are distributed over the circumference of the surface (3) of the thrust washer (1) that is near the clutch and can be snapped in between two neighbouring spring tongues (2) and engage positively behind them.

5. Release bearing according to Claim 1, **characterized in that** the holding arms (7) are respectively arranged in pairs in the circumferential direction and their holding projections (8) that engage behind the spring tongues (2) are facing away from one another.

6. Release bearing according to Claim 1, **characterized in that** radially extending webs (9), which are of a width that is less than/equal to the distance between two neighbouring spring tongues (2) and engage between them, are arranged between successive pairs of holding arms (5) on the surface (10) of the thrust washer (1) that is near the clutch.

7. Release bearing according to Claim 1, **characterized in that** the holding arms (7) are embedded in the plastic or fastened to the latter, for example by ultrasonic welding, or fastened to the reinforcement (5), for example by spot welding, soldering, adhesive bonding or punch riveting, or formed in one piece with the reinforcement (5).

8. Release bearing according to Claim 1, **characterized in that,** apart from the materials that are reinforced with a carbon fiber component
PA 46 CF 30 PTFE 5
PPA-GF 30 PTFE 15 and
PA46-GF 30 PTFE 5,
the following materials and additives are suitable for the material of the thrust washer (1) and for the coating of the flange surface of the annular flange:
thermoplastic material, preferably based on a high-temperature-resistant polyamide or other high-temperature-resistant thermoplastics, for example polyaryl ether ketones, from the range of polyamides, preferably polyamide 46 or partly aromatic polyamides, preferably polyphthalamide or polyhexamethylene-terephthalamide or copolymers thereof with polyhexamethylene isophthalamide and/or polyhexamethylene adipinamide or polymethylpentamethylene terephthalamide with friction- and wear-reducing and strength-increasing additives, carbon fibers and/or aramid fibers in a proportion by weight of 1 to 40%, preferably carbon fibers with a proportion by weight of 20 to 30%, aramid fibers with a proportion by weight of 1 to 15% and solid lubricants such as molybdenum disulphide with a proportion by weight of 1 to 5%, together with or alternatively graphite in a proportion by weight of 1 to 10%, together with or alternatively polytetrafluoroethylene in a proportion by weight of 1 to 30%, preferably a PTFE component of 5 to 15% by weight, together with or alternatively polyphenylene sulphone in a proportion by weight of 1 to 30%, preferably 1 to 15% by weight.

9. Release bearing according to Claim 1, **characterized in that** ribs directed towards the center are arranged on both surfaces as the microstructure and are formed as microribs (11, 11a) that are perpendicular or inclined counter to the direction of rotation of the respective surface.

10. Release bearing according to Claim 1, **characterized in that** a microstructure of the two surfaces is provided by molding on with an injection mold that has been blasted with a coarse abrasive or provided with micropyramids or microcones.

11. Release bearing according to Claim 1, **characterized in that** the microstructure is provided in the form of a corresponding crown toothing (17) or a similarly effective staggered toothing (18), which can be produced on both contact surfaces by molding it on them or by forming it in the contact surface of the peripheral bearing ring of the release bearing without removing material.

## Revendications

1. Butée d'embrayage de changement de vitesse, avec un disque de butée en matière plastique (1), dont la face éloignée du changement de vitesse (10) est en contact de pression avec une bride annulaire d'une bague de palier tournante de la butée d'embrayage et dont la face proche du changement de vitesse (3) se trouve en contact de pression avec des lamelles élastiques (2) d'une rondelle élastique et en plus en assemblage par complémentarité de forme par des bras de maintien (7) et des nervures (9) s'étendant radialement entre les lamelles élastiques (2), **caractérisée en ce que** le disque de butée (1) présente un renfort (5) et des bras de maintien (7) de préférence en métal et la matière plastique du disque de butée (1) comporte une proportion renforçant la structure et réduisant le frottement et **en ce qu'**il est prévu, sur la face éloignée du changement de vitesse (10) ainsi que sur la face de la bride annulaire de préférence revêtue de matière plastique, des microstructures permettant la formation rapide d'un assemblage par complémentarité de forme entre ces deux faces.

2. Butée d'embrayage selon la revendication 1,
**caractérisée en ce que** le renfort (5) et les bras de maintien (7) se composent d'une tôle mince, résistant à l'usure et de préférence recuite en 17Cr34, en bronze de béryllium CuZn37F37 ou en bronze de béryllium CuSn6Zn6F61, qui est revêtue ou enrobée de matière plastique par projection.

3. Butée d'embrayage selon la revendication 1,
**caractérisée en ce que** le renfort (5) présente dans la région des nervures (9) des mortaises (12) et des perçages (13) ainsi que dans la région de l'alésage et/ou du diamètre extérieur des doublages (14) et des coudes (15).

4. Butée d'embrayage selon la revendication 1, **caractérisée en ce que** les bras de maintien (7) sont répartis sur la périphérie de la face proche du changement de vitesse (3) du disque de butée (1) et peuvent être encliquetés entre deux lamelles élastiques voisines (2) et s'accrochent par l'arrière à celles-ci en complémentarité de forme.

5. Butée d'embrayage selon la revendication 1, **caractérisée en ce que** les bras de maintien (7) sont chaque fois disposés par paires dans la direction périphérique et leurs saillies de maintien (8) s'accrochant par l'arrière aux lamelles élastiques (2) sont orientées à l'opposé l'une de l'autre.

6. Butée d'embrayage selon la revendication 1, **caractérisée en ce que,** entre des paires successives de bras de maintien (7), des nervures (9) s'étendant radialement sont disposées sur la face proche du changement de vitesse (10) du disque de butée (1), nervures dont la largeur est inférieure ou égale à la distance entre deux lamelles élastiques voisines (2) et qui s'engagent entre celles-ci.

7. Butée d'embrayage selon la revendication 1,
**caractérisée en ce que** les bras de maintien (7) sont noyés dans la matière plastique ou sont fixés à celle-ci par exemple par soudage aux ultrasons ou au renfort (5) par exemple par soudage par points, par brasage, par collage ou par rivetage, ou sont formés d'une seule pièce avec le renfort (5).

8. Butée d'embrayage selon la revendication 1, **caractérisée en ce que,** pour la matière du disque de butée (1) et pour le revêtement de la surface de bride de la bride annulaire, en plus des matières suivantes renforcées par une proportion de fibres de carbone:
PA 46 CF 30 PTFE 5
PPA-GF 30 PTFE 15 et
PA46-GF 30 PTFE 5,
les matières et les matières d'addition suivantes conviennent également:
matière plastique thermoplastique, de préférence à base d'un polyamide résistant à la chaleur ou d'autres matières plastiques thermoplastiques résistant à la chaleur, par exemple des polyaryléthercétones du domaine des polyamides, de préférence la polyamide 46 ou des polyamides partiellement aromatiques, de préférence la polyphtalamide ou la polyhexaméthylène-téréphtalamide ou des copolymères de celles-ci avec la polyhexaméthylène-adipinamide ou la polyméthyl-pentaméthylène-téréphtalamide, avec des matières d'addition réduisant le frottement et l'usure et augmentant la résistance, des fibres de carbone et/ou des fibres d'aramide en une proportion en poids de 1 à 40 %, de préférence des fibres de carbone avec une proportion en poids de 20 à 30 %, des fibres d'aramide avec une proportion en poids de 1 à 15 % ainsi que des lubrifiants solides comme le bisulfure de molybdène avec une proportion en poids de 1 a 5 %, en complément ou en remplacement du graphite avec une proportion en poids de 1 à 10 %, en complément ou en remplacement du polytétrafluoroéthylène en une proportion en poids de 1 à 30 %, de préférence une proportion de PTFE de 5 à 15 % en poids, en complément ou en remplacement du polyphénylène sulfone avec une proportion en poids de 1 à 30 %, de préférence de 1 à 15 % en poids.

9. Butée d'embrayage selon la revendication 1, **caractérisée en ce que** la microstructure sur les deux faces est formée par des nervures orientées vers le centre, qui sont réalisés sous la forme de micronervures (11, 11a) perpendiculaires ou inclinées dans le sens opposé au sens de rotation de la face respective.

10. Butée d'embrayage selon la revendication 1, **caractérisée en ce qu'**il est prévu une microstructure des deux faces par injection dans un moule de coulée par injection grossièrement grenaillé ou pourvu de micropyramides ou de microcônes.

11. Butée d'embrayage selon la revendication 1, **caractérisée en ce qu'**il est prévu comme microstructure une denture plate correspondante (17) ou une denture croisée (18) de même efficacité, qui peuvent être produites sur les deux faces de contact par projection ou par formage sans enlèvement de copeaux sur la face d'appui de la bague de palier tournante de la butée d'embrayage.
